# EUROPÄISCHE PATENTSCHRIFT

(11) **EP 2 899 492 B1**
(45) Veröffentlichungstag und Bekanntmachung des Hinweises auf die Patenterteilung: **26.07.2017**
(21) Anmeldenummer: 15000149.3
(22) Anmeldetag: 20.01.2015
(51) Int. Cl.: F41H 5/26, G02B 23/08

(54) **Winkelspiegelsystem**
Periscope
Périscope

(30) Priorität: 28.01.2014 DE 102014100935
(43) Veröffentlichungstag der Anmeldung: 29.07.2015
(73) Patentinhaber: GuS Periscopes GmbH & Co. KG, 32312 Lübbecke (DE)
(72) Erfinder: Kuhnke, Dieter, 32312 Lübbecke (DE)
(74) Vertreter: Rolf, Gudrun, LL.M

(56) Entgegenhaltungen:
- DE-A1- 2 810 206
- DE-A1-102006 062 262
- DE-A1-102008 021 487
- DE-A1-102008 061 701

## Beschreibung

Die Erfindung betrifft ein Winkelspiegelsystem für ein gepanzertes Fahrzeug, aus einem Gehäuse mit einem Ausblick, einem innenliegenden Prismenblock mit einer oberen Umlenkfläche und einer unteren horizontalen Abschlussfläche sowie mit einem Einblick aus einem separaten unteren Umlenkspiegel, der um eine quer zur Einblickrichtung horizontale Schwenkachse am Gehäuse gelagert ist und mit einem zugeordneten elektronischen Display in Einblickrichtung hinter dem Umlenkspiegel.

Es ist eine Winkelspiegelvorrichtung bekannt, DE 10 2006 062 262 B4, die als Periskop mit einem Hohlzylinder ausgebildet ist und einen darüber angeordneten verschwenkbaren oberen Umlenkspiegel und einem innerhalb des Hohlzylinders angeordneten unteren Umlenkspiegel sowie ein in den Hohlzylinder einstrahlendes Display aufweist, um verschiedene Einblickrichtungen in die Winkelspiegelvorrichtung nach außen oder von außen zu ermöglichen.

Nachteilig an diesem vorbekannten Periskop ist seine Bauhöhe, die weit in den Innenraum eines gepanzerten Fahrzeuges hinein reicht und damit zu einer ständigen Bewegungsbeeinträchtigung und einer Behinderung beim Ein- und Aussteigen aus dem Fahrzeug führt. Zudem ist eine solche fest in ein Fahrzeug eingebaute Vorrichtung nur sehr aufwendig der sich schnell entwickelnden Displaytechnik anzupassen.

Bekannt ist weiterhin ein Winkelspiegel für ein Panzerfahrzeug, DE 10 2008 061 701 A1, welcher einen klappbar unter einem Prisma angeordneten Spiegel aufweist, welcher so einstellbar ist, dass eine Instrumententafel des Panzerfahrzeuges auch von oben durch einen äußeren Einblick in den Winkelspiegel erkennbar ist, wenn das Fahrzeug bei geöffneter Fahrerklappe bewegt wird. Auch diese Konstruktion, die als Ausgangspunkt der vorliegenden Erfindung angesehen wird, ist recht sperrig und beansprucht einen großen Bauraum.

Aufgabe der Erfindung ist es, ein Winkelspiegelsystem zur Verfügung zu stellen, welches zumindest zeitweise eine wesentlich verringerte Bauhöhe und Bautiefe aufweist, ebenso wie seine Wirtschaftlichkeit verbessert und seine Benutzerfreundlichkeit, Funktionsvielfalt und Anpassungsfähigkeit gesteigert sein soll.

Die Lösung dieser Aufgabe ergibt sich in Verbindung mit den Merkmalen des Oberbegriffes erfindungsgemäß im Zusammenspiel mit den technischen Merkmalen des kennzeichnenden Teils des Hauptanspruches.

Dadurch, dass das Display an einem Displayhalter angeordnet ist, der unmittelbar als Teil des Gehäuses des Winkelspiegelsystems ausgeführt ist, lässt sich durch den Wegfall des Erfordernisses eines separat im Fahrzeug anzuordnenden Displays in einem eigenen Gehäuse und dessen Anordnung im Sichtbereich eines Fahrers zusätzlich zum verschwenkbaren Umlenkspiegel bereits ein erheblicher Raumgewinn erzielen. Die Trennung von Displayhalter und Display sorgt des Weiteren für eine vereinfachte Austauschbarkeit des Displays. Erfindungsgemäß ist der Umlenkspiegel vollständig in eine horizontale Lage unter, oder sogar vollständig in das Gehäuse verschwenkbar ausgebildet, sodass der ansonsten dafür erforderliche Bauraum als nutzbares Raumvolumen gewonnen werden kann.

Gemäß der Erfindung ist der Displayhalter zur Erzeugung eines noch weiter vergrößerten Bewegungsfreiraumes innerhalb eines Fahrzeuges ebenfalls um eine horizontale Schwenkachse unter einen hochgeschwenkten Umlenkspiegel umschwenkbar ausgebildet, sodass bei Nichtgebrauch des Winkelspiegelsystems dieses durch seine raumsparende Bauweise fast vollständig weggeklappt werden kann, wodurch sich beispielsweise der Ein- und Ausstieg aus einem gepanzerten Fahrzeug oder der Zugang zum Fahrersitz deutlich vereinfacht und die Mannschaftsräume somit besser nutzbar werden.

Weitere vorteilhafte Ausgestaltungen des Gegenstandes der Erfindung ergeben sich mit und in Kombination aus den nachfolgenden Unteransprüchen.

Um diesen Umlenkspiegel jedoch in eine optimale Position bringen zu können, ist er vorteilhafterweise an seiner horizontalen Schwenkachse parallel nach unten teleskopierbar ausgebildet und dabei weiterhin um seine Schwenkachse verschwenkbar, wodurch eine sehr ergonomische Positionierung des Umlenkspiegels möglich ist, beispielsweise für den Fall des Aussetzens des elektronischen Displays und rein analoger Funktion des Winkelspiegelsystems. So bleibt eine volle Backup - Funktion des Systems auch bei Stromausfall erhalten, da der Winkelspiegel dann als rein optisches Gerät weiter genutzt werden kann.

Bei Nichtgebrauch eines solchen teleskopierbar gelagerten Umlenkspiegels lässt sich dieser sehr platzsparend in eine horizontale Position unmittelbar unterhalb des an der Fahrzeugdecke angeordneten Gehäuses verschieben, wodurch gleichzeitig eine freie Sicht auf das elektronische Display erzeugt wird.

Besonders vorteilhaft ist weiterhin, dass der Displayhalter mit unterschiedlichen Aufnahmevorrichtungen und Anschlussvorrichtungen für elektronische Displays unterschiedlicher Hersteller ausgestattet ist, sodass eine herstellerunabhängige Auswahl von Displays getroffen werden kann, um das Winkelspiegelsystem zu komplettieren. Des Weiteren wird so die einfache Austauschbarkeit vorhandener Systeme ohne bauliche Veränderung am Fahrzeug ermöglicht. Weiterhin lässt sich das einzige elektronische Bauteil dieses Winkelspiegelsystems in kurzen Intervallen dem aktuellen Stand der Technik anpassen, ohne den konventionellen mechanischen bzw. analogen Teil des Winkelspiegelsystems ebenfalls austauschen zu müssen.

Vorteilhafterweise lässt sich das Winkelspiegelsystem mit einem elektronischen Display ausstatten, welches ebenfalls einen berührungsempfindlichen Touchbildschirm aufweist, wobei die Displays von handelsüblichen elektronischen Bilddarstellungsgeräten, wie etwa Smartphones, Tablets oder Smartlets zur Verfügung gestellt werden können, die einem Fahrzeugführer noch eine erheblich größere Anzahl von Informationen zugänglich machen können. Ein solches Gerät kann alternativ oder zusätzlich auch mit einer Sprach-, Gesten-, Blick- oder Mimik-Steuerung ausgestattet sein und gleichzeitig weiteren Kommunikations- und Informationszwecken dienen.

Bei einer weiteren bevorzugten Ausführungsform der Erfindung ist ein Umlenkspiegel alternativ oberhalb eines Displays, oder nach unten teleskopiert, unmittelbar vor einem Display platzierbar, sodass beispielsweise bei einem oberhalb eines Displays platzierten Umlenkspiegel einer Person gleichzeitig ein Einblick durch den Ausblick des Winkelspiegelsystems möglich ist und durch ein nur geringes Verschwenken der Augen oder des Kopfes nach unten auch ein Einblick in das tiefere Display.

Der Umlenkspiegel kann vorteilhafterweise als halbdurchlässiger Spiegel ausgeführt sein kann, sodass bei seiner tieferen Positionierung unmittelbar vor einem elektronischen Display dieses gleichzeitig sichtbar bleibt, wodurch es einem Betrachter ermöglicht wird, beide Informationsquellen gleichzeitig und ohne Änderung des Blickwinkels oder der Kopfneigung erkennen zu können.

Bei einer Ausgestaltung des Umlenkspiegels als halbdurchlässiger Spiegel ist es von Vorteil, diesen mit einer Splitterschutzfolie zu versehen, um die Fahrzeuginsassen zu schützen.

Als besonders vorteilhaft ist ebenfalls hervorzuheben, dass das Gehäuse des Winkelspiegelsystems zur Optimierung des Raumgewinnes nur weniger als halb so hoch wie der nach oben herausragende Abschnitt des Prismenblockes ausgebildet ist, wodurch sich ein erheblicher Raumgewinn im Fahrzeug erzielen lässt.

Nachfolgend ist ein Ausführungsbeispiel der Erfindung anhand von Zeichnungen näher beschrieben. Es zeigen:
- Fig. 1: ein Winkelspiegelsystem mit vollständig eingeschwenktem Umlenkspiegel und klappbarem Displayhalter in zwei unterschiedlichen Schwenkpositionen,

- Fig. 2: eine Vorderansicht eines Winkelspiegelsystems mit jedoch nicht erfindungsgemäßem starrem Displayhalter des Gehäuses und vollständig eingeschwenktem Umlenkspiegel,
- Fig. 3: ein Winkelspiegelsystem mit jedoch nicht erfindungsgemäßem festem Displayhalter und teleskopierbarem Umlenkspiegel in einer eingeschwenkten Position und zwei ausgeklappten Positionen in verschiedenen Höhen, und
- Fig. 4: den Winkelspiegel gemäß Fig. 3 in Vorderansicht mit max. abgesenktem und nach unten verschwenktem Umlenkspiegel.

Das Winkelspiegelsystem besteht aus einem Gehäuse 1;11 mit einem Ausblick 2, einem innenliegenden Prismenblock mit einer oberen Umlenkfläche 12 sowie mit einer unteren horizontalen Abschlussfläche und mit einem Einblick 3 aus einem separaten unteren Umlenkspiegel 4, der um eine quer zur Einblickrichtung verlaufende horizontale Schwenkachse 6 am Gehäuse 1;11 gelagert ist und aus einem dem Gehäuse 1;11 zugeordneten elektronischen Display 7, welches in Einblickrichtung in das Winkelspiegelsystem hinter dem Umlenkspiegel 4 angeordnet ist. Das Gehäuse 1;11 des Winkelspiegelsystems ist sehr flach ausgebildet, insbesondere weniger als halb so hoch wie der nach oben aus einem Fahrzeug herausragende Abschnitt des Prismenblockes, wobei das Gehäuse 1;11 nur durch eine Gehäusedichtung 13 vom Innendach des Fahrzeuges entfernt angeordnet ist.

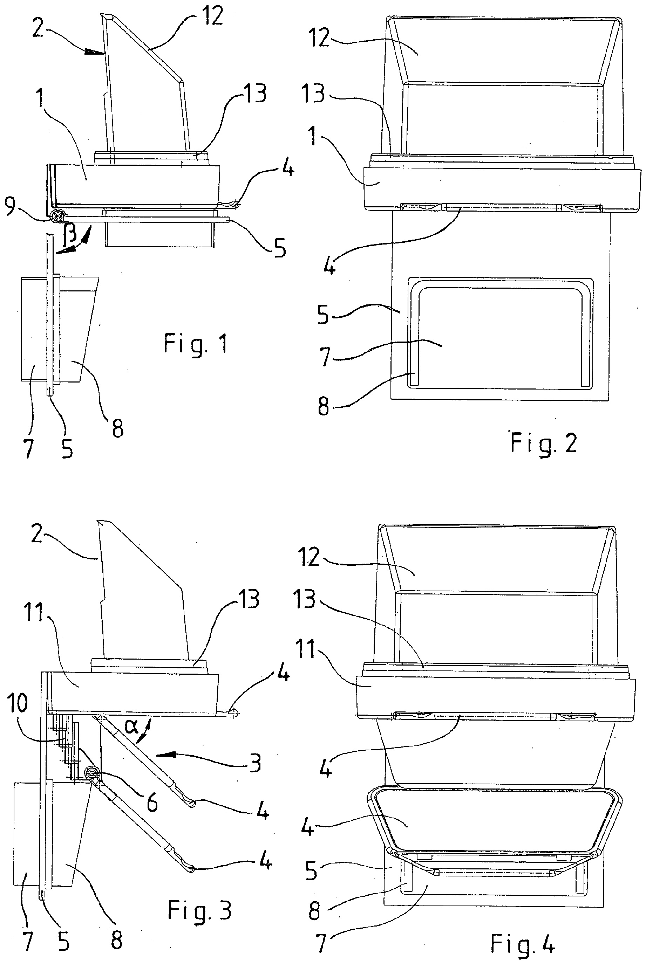

Bei einer jedoch nicht erfindungsgemäßen Ausführungsform des Winkelspiegelsystems, wie sie in den Figuren 3 und 4 dargestellt ist, ist der Displayhalter 5 starr mit dem Gehäuse 11 verbunden bzw. bildet eine Baueinheit mit diesem und ist mit einem in Einblickrichtung hinter dem Displayhalter 5 angeordneten Display 7 ausgestattet, welches durch eine Ausnehmung im Displayhalter 5 nach vorne sichtbar ist. Um die Ausnehmung herum ist ein Blendschutz 8 angeordnet.

Bei einer erfindungsgemäßen Variante des Gehäuses 1 des erfinderischen Winkelspiegelsystems, wie sie in der Figur 1 dargestellt ist, ist nicht nur der Umlenkspiegel 4 über eine horizontale Achse 6 um einen Winkel α drehbar am Gehäuse 1 angeschlossen, sondern ebenfalls der Displayhalter 5 über eine horizontale Achse 9 so daran angeordnet, dass er in einer Ruheposition parallel unter das Gehäuse 1 des Winkelspiegelsystems verschwenkbar ist und in einer Benutzungsposition um einen Winkel β um etwa 90° nach unten geklappt werden kann. Diese beiden Positionen des Displays 7 bzw. des Displayhalters 5 sind in der Fig. 1 dargestellt, wohingegen in Fig. 2, wie auch in den Figuren 3 und 4, eine nicht erfindungsgemäße Variante mit starrem Displayhalter 5 gezeigt ist.

Der Umlenkspiegel 3, welcher in Fig. 1 bis 4 stets auch in einer vollständig nach oben geklappten ersten Position dargestellt ist, ist in Fig. 3 zusätzlich in einer zweiten, um einen Winkel α nach unten geklappten oberen Position sowie in einer dritten, nach unten teleskopierten Position dargestellt.

In der nur um einen Winkel α nach unten geschwenkten zweiten Position des Umlenkspiegels 4 kann ein Betrachter gleichzeitig in den Einblick 3 des Winkelspiegelsystems sehen und durch eine nur geringe Änderung des Blickwinkels der Augen oder des Kopfes nach unten ebenfalls das digitale Display 7 ablesen.

In der dritten Position eines vollständig abgesenkten Umlenkspiegels 4 ist dieser dagegen vor dem Display 7 platziert, sodass dieses nicht abgelesen werden kann, es sei denn, dass der Umlenkspiegel 3 als halbdurchlässiger Spiegel ausgeführt ist, wozu er zum Schutz der Fahrzeuginsassen mit einer Splitterschutzfolie ausgestattet ist.

Das in den Figuren hinter dem Displayhalter 5 angeordnete Display 7 kann, wie zeichnerisch nicht dargestellt, auch in Blickrichtung vor dem Displayhalter 5 angeordnet sein und Aufnahmevorrichtungen und Anschlussvorrichtungen für elektronische Displays 7 unterschiedlicher Hersteller aufweisen, etwa auch elektronische Displays mit Touchbildschirm, wobei diese Displays 7 auch aus handelsüblichen elektronischen Geräten mit Bilddarstellung bestehen können, wie etwa Smartphones, Tablets oder Smartlets, die dann zusätzliche Aufgaben wie Kommunikation, Information oder zur Fahrzeugsteuerung übernehmen können und die ergänzend auch über sprach- oder optische Befehle bedient werden können.

## Patentansprüche

1. Winkelspiegelsystem mit einem Gehäuse (1;11) mit einem Ausblick (2), einem innenliegenden Prismenblock mit einer oberen Umlenkfläche (12) sowie mit einer unteren horizontalen Abschlussfläche und mit einem Einblick (3) aus einem separaten unteren Umlenkspiegel (4), der um eine quer zur Einblickrichtung horizontalen Schwenkachse (6) am Gehäuse (1;11) in eine horizontale Lage unter oder in das Gehäuse (1;11) verschwenkbar ausgebildet ist und mit einem zugeordneten elektronischen Display (5) in Einblickrichtung hinter dem Umlenkspiegel, **dadurch gekennzeichnet, dass** das Display (5) an einem Displayhalter (7) angeordnet ist, der als Teil des Gehäuses (1;11) des Winkelspiegelsystems ausgebildet ist wobei der Displayhalter (5) zur Erzeugung eines vergrößerten Bewegungsfreiraumes innerhalb eines Fahrzeuges um eine horizontale Schwenkachse (9) in eine waagerechte Position unter einen hochgeschwenkten Umlenkspiegel (3) umschwenkbar ausgebildet ist.

2. Winkelspiegelsystem nach einem der vorgenannten Ansprüche, **dadurch gekennzeichnet, dass** der Umlenkspiegel (3) an seiner horizontalen Schwenkachse (6) parallel nach unten teleskopierbar und weiterhin um die Schwenkachse (6) verschwenkbar ausgebildet ist.

3. Winkelspiegelsystem nach einem der vorgenannten Ansprüche, **dadurch gekennzeichnet, dass** der Displayhalter (5) Aufnahmevorrichtungen und Anschlussvorrichtungen für elektronische Displays (7) unterschiedlicher Hersteller aufweist.

4. Winkelspiegelsystem nach Anspruch 3, **dadurch gekennzeichnet, dass** das elektronische Display (7) mit einem Touchbildschirm ausgestattet ist.

5. Winkelspiegelsystem nach Anspruch 3, **dadurch gekennzeichnet, dass** als Display (7) handelsübliche elektronische Geräte mit Bildschirm, wie Smartphones, Tablets oder Smartlets auf dem Displayhalter (5) angeordnet sind und eine Sprach-, Gesten-, Blick- oder Mimik-Steuerung aufweisen.

6. Winkelspiegelsystem nach einem der vorgenannten Ansprüche, **dadurch gekennzeichnet, dass** ein Umlenkspiegel (3) oberhalb eines Displays (7) oder vom Gehäuse 1(11) nach unten teleskopiert vor einem Display (7) platzierbar ausgebildet ist.

7. Winkelspiegelsystem nach Anspruch 6, **dadurch gekennzeichnet, dass** ein vor einem Display (7) positionierbarer Umlenkspiegel (3) als halbdurchlässiger Spiegel ausgeführt ist und die Informationen des Displays (7) und des Umlenkspiegels (3) gleichzeitig aus einem Blickwinkel sichtbar sind.

8. Winkelspiegelsystem nach Anspruch 7, **dadurch gekennzeichnet, dass** ein Umlenkspiegel (3) mit einer Splitterschutzfolie versehen ist.

9. Winkelspiegelsystem nach einem der vorgenannten Ansprüche, **dadurch gekennzeichnet, dass** das Gehäuse (1;11) zur Optimierung des Raumgewinns innerhalb des Fahrzeuges weniger als halb so hoch wie der nach oben aus einem Fahrzeug herausragende Abschnitt des Prismenblockes ausgeführt ist.

## Claims

1. Periscope system having a housing (1;11) with a view out (2), an internal prism block with an upper deflection face (12) and with a lower horizontal terminating face, and having a view in (3) from a separate lower deflection mirror (4), which is formed so as to be pivotable about a horizontal pivot axis (6) on the housing (1; 11), transversely with respect to the viewing direction, into a horizontal position underneath or in the housing (1; 11), and having an associated electronic display (5) after the deflection mirror in the viewing direction, **characterized in that** the display (5) is arranged on a display holder (7), which is formed as part of the housing (1; 11) of the periscope system, wherein, in order to produce an enlarged freedom of movement within a vehicle, the display holder (5) is formed so as to be pivotable about a horizontal pivot axis (9) into a horizontal position underneath a pivoted-up deflection mirror (3).

2. Periscope system according to one of the preceding claims, **characterized in that** the deflection mirror (3) can be telescoped downward in a parallel fashion on its horizontal pivot axis (6) and is also formed so as to be pivotable about the pivot axis (6).

3. Periscope system according to one of the preceding claims, **characterized in that** the display holder (5) has holding devices and connecting devices for electronic displays (7) from different manufacturers.

4. Periscope system according to Claim 3, **characterized in that** the electronic display (7) is equipped with a touch-screen monitor.

5. Periscope system according to Claim 3, **characterized in that** commercially available electronic devices with a screen, such as smart phones, Tablets or Smartlets are arranged on the display holder (5) as the display (7) and have voice, gesture, gaze or mimic control.

6. Periscope system according to one of the preceding claims, **characterized in that** a deflection mirror (3) is formed so as to be placeable above a display (7) or telescoped downward from the housing 1(11) in front of a display (7).

7. Periscope system according to Claim 6, **characterized in that** a deflection mirror (3) that can be positioned in front of a display (7) is designed as a semi-transparent mirror, and the information from the display (7) and from the deflection mirror (3) is visible simultaneously from a viewing angle.

8. Periscope system according to Claim 7, **characterized in that** a deflection mirror (3) is provided with a shatter protection film.

9. Periscope system according to one of the preceding claims, **characterized in that**, in order to optimize the gain in space within the vehicle, the housing (1; 11) is designed to be less than half as high as the section of the prism block projecting upwards out of a vehicle.

## Revendications

1. Système de rétroviseur angulaire comprenant un boîtier (1 ; 11) muni d'un regard (2), un bloc prismatique interne doté d'une surface de renvoi supérieure (12) et comprenant aussi une surface de terminaison horizontale inférieure, et doté d'un oeilleton (3) constitué d'un miroir de renvoi inférieur (4) séparé, qui est configuré pour pouvoir pivoter dans une position horizontale sous ou dans le boîtier (1 ; 11) autour d'un axe de pivotement horizontal (6) sur le boîtier (1 ; 11), transversal par rapport à la direction de l'oeilleton, et comprenant un afficheur électronique (5) associé dans la direction de l'oeilleton derrière le miroir de renvoi, **caractérisé en ce que** l'afficheur (5) est disposé dans un support d'afficheur (7) qui est réalisé sous la forme d'une partie du boîtier (1 ; 11) du système de rétroviseur angulaire et le support d'afficheur (5) étant réalisé de manière à pouvoir basculer autour d'un axe de pivotement horizontal (9) dans une position horizontale sous un miroir de renvoi (3) pivoté vers le haut en vue de produire un espace de mouvement agrandi à l'intérieur d'un véhicule.

2. Système de rétroviseur angulaire selon l'une des revendications précédentes, **caractérisé en ce que** le miroir de renvoi (3), au niveau de son axe de pivotement horizontal (6), est réalisé télescopique en parallèle vers le bas et de manière à pouvoir continuer de pivoter autour de l'axe de pivotement (6).

3. Système de rétroviseur angulaire selon l'une des revendications précédentes, **caractérisé en ce que** le support d'afficheur (5) possède des dispositifs d'accueil et des dispositifs de raccordement pour des afficheurs électroniques (7) de différents fabricants.

4. Système de rétroviseur angulaire selon la revendication 3, **caractérisé en ce que** l'afficheur électronique (7) est équipé d'un écran tactile.

5. Système de rétroviseur angulaire selon la revendication 3, **caractérisé en ce que** des appareils électroniques à afficheur courants du commerce, tels que des smartphones, des tablettes ou des smartlets sont montés sur le support d'afficheur (5) en tant qu'afficheurs (7) et possèdent une commande vocale, gestuelle, du regard ou par expression faciale.

6. Système de rétroviseur angulaire selon l'une des revendications précédentes, **caractérisé en ce qu'**un miroir de renvoi (3) est réalisé de manière à pouvoir être placé au-dessus d'un afficheur (7) ou devant un afficheur (7) de manière télescopique vers le bas depuis le boîtier 1(11).

7. Système de rétroviseur angulaire selon la revendication 6, **caractérisé en ce qu'**un miroir de renvoi (3) qui peut être positionné devant un afficheur (7) est réalisé sous la forme d'un miroir semi-transparent et les informations de l'afficheur (7) et du miroir de renvoi (3) sont visibles simultanément depuis un angle de vision donné.

8. Système de rétroviseur angulaire selon la revendication 7, **caractérisé en ce qu'**il est pourvu d'un miroir de renvoi (3) muni d'un film de protection contre les éclats.

9. Système de rétroviseur angulaire selon l'une des revendications précédentes, **caractérisé en ce que** le boîtier (1 ; 11), en vue d'optimiser le gain d'espace à l'intérieur du véhicule, est réalisé avec une hauteur inférieure à la moitié de la portion du bloc prismatique qui fait saillie vers le haut hors d'un véhicule.
